# EUROPEAN PATENT SPECIFICATION

(11) **EP 3 668 106 B1**
(45) Date of publication and mention of the grant of the patent: **23.02.2022**
(21) Application number: 18211767.1
(22) Date of filing: 11.12.2018
(51) Int. Cl.: H04Q 11/00, H04L 12/24

(54) **METHOD AND SYSTEM FOR SERVICE PROVISIONING TO AN OPTICAL NETWORK TERMINAL**
VERFAHREN UND SYSTEM ZUR BEREITSTELLUNG VON DIENSTEN IN EINEM ENDGERÄT MIT OPTISCHEM NETZWERK
PROCÉDÉ ET SYSTÈME DE FOURNITURE DE SERVICES À UN TERMINAL DE RÉSEAU OPTIQUE

(43) Date of publication of application: 17.06.2020
(73) Proprietor: Nokia Solutions and Networks Oy, 02610 Espoo (FI)
(72) Inventor: VANDEPUY, Nicolas, 91260 NOZAY (FR); MAGUEUR, Kevin, 91620 NOZAY (FR)
(74) Representative: Novagraaf Technologies

(56) References cited:
- EP-A1- 3 128 698
- US-B1- 7 885 549

## Description

### Technical Field

Various example embodiments relate generally to methods and systems for service provisioning to an optical network terminal through an optical network.

### Background

In a wholesaler/retailer market, an operator A (wholesaler) may provide an optical network infrastructure to another operator B (retailer) who further sells the broadband services (e.g. layer 3 and above services including for example voice, high-speed internet, IPTV, etc) to end users. The optical network infrastructure of operator A implements typically a layer 2 link from the end users' home to the wholesaler's network infrastructure which is then further connected to the retailer's network in order to deliver broadband services on top of the layer 2 link.

In a wholesaler/retailer model, once the end user subscribes the broadband services (layer 3 or above) from the retailer, the retailer will first request a layer 2 service from the wholesaler and then configure the layer 3 on top. For the end user, the retailer is responsible for the service launch and the customer is in contact with the retailer only.

At least some solutions for layer 2 service launch imply that a user (either the customer or a technician) sends the serial number of the optical network terminal which has to be activated at the customer's home in order to trigger the service provisioning properly. This may only be performed using a device having a connection through another communication network (e.g. a mobile telecommunication network), either via the Internet to a dedicated web portal specified in the optical network terminal package or using a specific software application / specific device for technicians. In addition, the presence of a technician may be necessary when no Internet and dedicated web portal is available.

Further this may also imply the use of a smart device for scanning QR code (QR, Quick Response code) or barcode encoding the serial number on the ONT package to avoid errors while reading and typing the serial number and / or to avoid tedious / erroneous typing the serial number.

Patent document US 7 885 549 B1 discloses a method for activating services in a Passive Optical Networking (PON) system that comprises facilitating pre-provisioning of an Optical Line Terminal (OLT) within a PON system, wherein said pre provisioning includes provisioning PON services on the OLT prior to installing an Optical Network Termination unit (ONT) controlled by the OLT, and facilitating automatic activation of said PON services after installation of the ONT is completed, wherein said PON services are served by the ONT. Unlike conventional approaches for activating PON services, the method enables the provisioning of PON services to be decoupled from the physical installation of an appropriate network interface device installed at the service subscriber's site.

Patent document EP 3 128 698 A1 discloses a service processing method which includes: establishing a corresponding relationship between a device identifier used for identifying an optical network unit (ONU) and a service provider (SP); determining the SP providing a service according to the device identifier reported by the ONU and the corresponding relationship; and processing the service provided by the SP according to the determined SP. A binding relationship with the SP is established through the device identifier of the optical network unit.

### Summary

According to a first aspect, disclosed is a supplier management system according to claim 1.

According to a second aspect, disclosed is an operator management system according to claim 6.

According to a third aspect, disclosed is a method according to claim 10.

According to a fourth aspect, disclosed is a method according to claim 11.

According to a fifth aspect, disclosed is a computer program code according to claim 13.

According to one aspect, disclosed is a computer readable storage medium storing computer program code according to the fifth aspect.

According to one aspect, disclosed is data carrier signal carrying a computer program code according to the fifth aspect.

### Brief Description of the Drawings

Example embodiments will now be described with reference to the accompanying drawings, wherein like reference numerals identify similar structural elements. In the drawings:
- FIG. 1A shows an optical network for service provisioning according to one or more example embodiments.
- FIG. 1B shows a more detailed view on a portion of an optical network according to one or more example embodiments.
- FIG. 2A shows a management system for managing service provisioning information according to one or more example embodiments.
- FIG. 2B shows aspects of the implementation of one or more management systems.
- FIG. 3A-3B shows flowcharts of a method for service provisioning according to one or more example embodiments.
- FIG. 4 shows a flowchart of a method for service provisioning according to one or more example embodiments.

### Detailed Description

Example embodiments will be described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the following, functional blocks denoted as "means configured to perform ..." (a certain function) shall be understood as functional block(s) comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. Means for performing one or more functions may also comprises at least processor and at least one memory (e.g. in a system or apparatus) for storing computer program code configured to, with the at least one processor, cause the performance (by the system or apparatus) of the one or more functions.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used in this description, the term "circuitry" refers to (a) hardware-only circuit implementations (such as implementations in only analogue and/or digital circuitry); and (b) combinations of circuits and software (and/or firmware), such as (as applicable) (i) a combination of analog and / or digital hardware circuits(s) with software and / or firmware, and (ii) any portions of hardware processor(s) with software (including digital signal processor(s)), software and memory(ies) that work together to cause an apparatus (such as the management systems described herein) to perform various functions; (c) hardware circuit(s) and or processor(s), such as a microprocessors or a portion of a microprocessor(s), that require software (e.g. firmware) for operation, even if the software or firmware is not physically present when it is needed for operation.

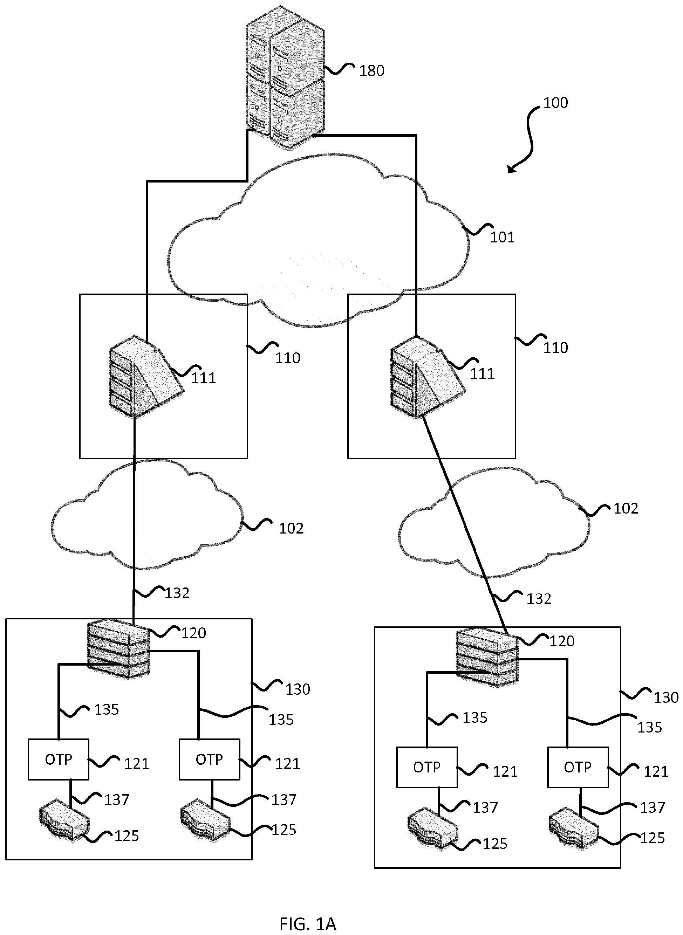

FIG. 1A represents in a schematic manner an optical network (100) according to one or more example embodiments. The optical network (100) may provide broadband services including broadband Internet services, Voice over Internet Protocol, VoIP, and video services, etc. The optical network (100) may include a core network (101) and one or more access networks (102). At the interface between the core network (101) and an access network (102), a Point-of-Presence, POP, (110) is implemented with one or more optical line terminators, OLT, (111). An access network (102) includes one or more optical connections (132), each optical connection being set up between an OLT and a distribution device (120) located at the basement of a building (130) to be connected. In a same building (130), one or more terminal optical connections (135) may then be set up from the distribution device (120) for one or more customers. Each terminal optical connections (135) ends with an optical termination point, OTP (121). The ONT (125) installed in the customer's home (e.g. user's flat) is connected via an optical cable (137) and an optical connector (not represented) to a corresponding OTP (121). On core network side, an OLT management system (180) is optically connected to one or more OLTs (111) of the one or more access networks (102) and configured to implement the management of the optical connections with the OLTs (111).

In one or more embodiments, the wording "optical network terminal" designates a device that terminates (endpoint) of an access network of an optical network. The optical network terminal may be configured to implement an interface between optical connection and local Ethernet / Wifi connections between the ONT and customer's computers or electronic devices. The wording "optical network terminal" may also covers embodiments of "optical network unit" as defined in the Recommendation ITU-T G.984.3.

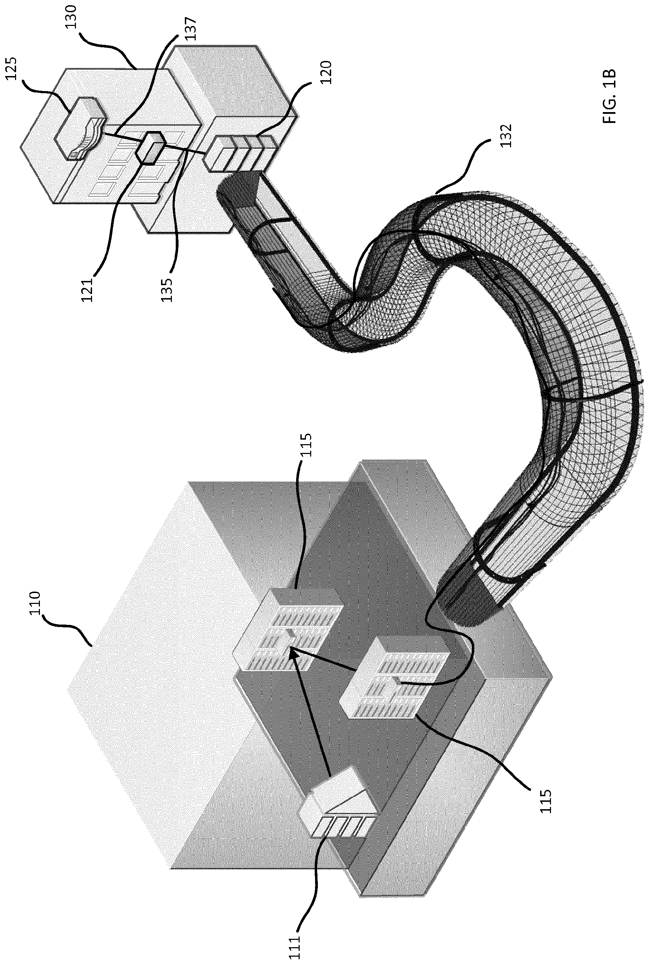

FIG. 1B shows a more detailed view of the optical connections between an OLT and an ONT according to one or more embodiments. A POP (110) comprises an OLT (111) and one or more distribution frames (115) from which an optical connection (132) is set up to a building (130). A distribution device (120) at the basement of the building is connected to an OTP (121). The ONT (125) in the customer's flat is connected via an optical cable (137) and an optical connector (not represented) to a corresponding OTP (121).

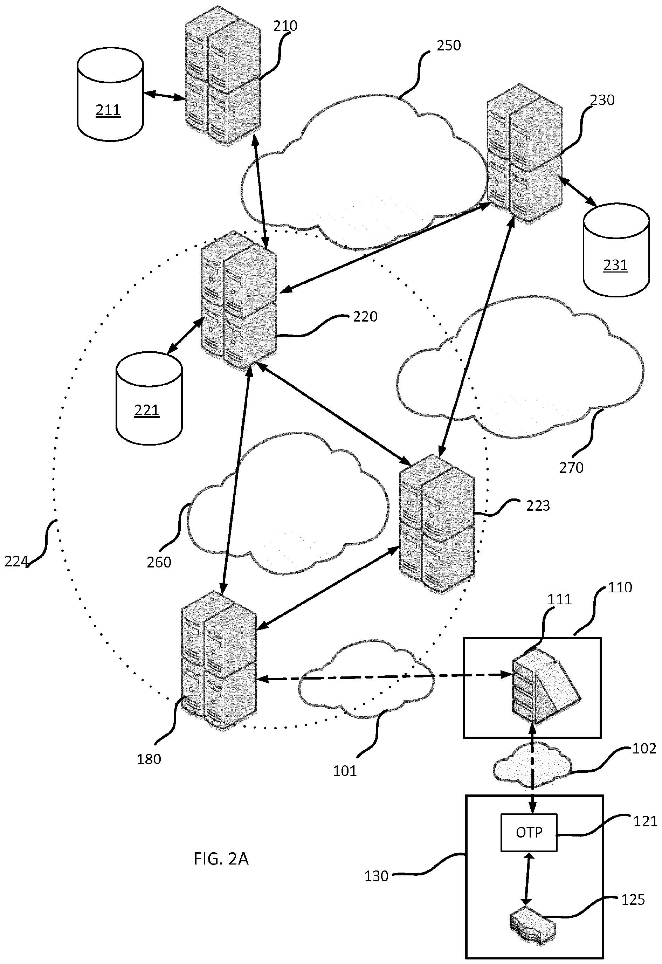

FIG. 2A shows a management system (200) for managing service provisioning information according to one or more example embodiments. The system allows different type of actors to collaborate for service provisioning for a customer (e.g. end user), including activation of layer 2 services for optical network terminal (also designated hereafter as ONT) connected to an optical network (ON). The actors may include :
- a wholesaler (e.g. a layer 2 service provider or optical network operator for layer 2 services);
- a retailer (e.g. a layer 3 service provider or optical network operator for layer 3 - and above - services);
- a supplier (e.g. device supplier, at least ONT supplier).

In one or more embodiment, the wholesaler is the operator of a core network (101) and of one or more access networks (102). According to a possible business scheme, the wholesaler provides the network infrastructure including the core network (101) and access networks (102) with all necessary optical connections up to an distribution device (120) at the customer's building basement, while the retailer provides the optical connections between the distribution device (120) and OTP (121) with associated optical connector in the customer's home (e.g. the customer's flat). The supplier provides the ONT and an optical cable to connect the ONT to the optical connector to be installed by the retailer.

Layer 2 and layer 3 are defined in the OSI model (Open Systems Interconnection model). For example, in this model, the layer 1 is the physical layer, the layer 2 is the transport layer, while the layer 3 is the network layer.

A serial number of an ONT may be any unique identifier identifying uniquely the ONT as a physical device. For example, a MAC address may be used as unique identifier according to standards. Other type of unique identifiers may be used.

The management system (200) may include a retailer management system (210) and an associated retailer database (211), a wholesaler management system (220) and an associated wholesaler database (221), a supplier management system (230) and an associated pre-registration database (231). The retailer management system (210) is interconnected with the wholesaler management system (220) through one or more networks (250). The supplier management system (230) is interconnected with the wholesaler management system (220) through one or more networks (250). These one or more networks (250) may be implemented using one or more communication interfaces and / or one or more communication protocols. The one or more networks (250) may be wired / wireless network, optical / non-optical network. The one or more networks (250) may be a virtual private network, implemented through a local area or wide area network, or any other data communication network..

The pre-registration database (231) is configured to store, for each ONT of a plurality of ONT on which such pre-provisioning has been performed, a pre-provisioning report of pre-provisioning performed to the ONT in association with a serial number of the ONT.

In one or more embodiments, the retailer management system (210) and the wholesaler management system (220) are interconnected in an integrated manner. Similarly the wholesaler management system (220) and the supplier management system (230) may be interconnected in an integrated manner. The interconnection between these management systems may for example be implemented by a middleware configured to allow data exchange (e.g. sending and receiving messages and / or requests, queries and responses, etc) in an integrated manner. The specific data format may be specified for the data exchanges. The interconnection may be implemented by means of dedicated software and / or hardware interfaces, for example specific Application Program Interfaces (APIs).

The management system (200) may include an Element Management System, EMS, (223). The EMS (223) is configured to implement a provisioning service for ONT provisioning and activation for ONTs (125) that are connected to the optical network (100). The management system (200) may include an OLT management system (180) configured to implement optical connections with one or more OLTs (111) and is used as interface with the EMS (223). The EMS (223) may manage through the OLT management system (180) all OLTs (111) of a given network.

In one or more embodiments, the wholesaler management system (220) is interconnected with the EMS (223). The wholesaler management system (220) and EMS (223) may be interconnected through a network (260), through one or more communication interfaces and / or using one or more communication protocols. The network (260) may be a wired / wireless network, an optical / non-optical network. The network (260) may be a virtual private network, implemented through a local area or wide area network, or any other data communication network.

The OLT management system (180) is configured to generate communication log for data received by the OLT management system from the OTLs managed by this OLT management system (180). The EMS (223) is configured to analyze the OLT(s) communication logs. For example, the EMS may constantly read the OLT(s) communication logs in order to detect new data and a newly connected piece of equipment, e.g. a new ONT (125).

In one or more embodiments, the supplier management system (230), the preregistration database (231) and the EMS (223) are interconnected, for example through a network (270), through one or more communication interfaces and / or using one or more communication protocols. The network (270) may be a wired / wireless network, an optical / non-optical network. The network (270) may be a virtual private network, implemented through a local area or wide area network, or any other data communication network.

The EMS (223) is configured to send to the supplier management system (230) a notification including the serial number of the newly connected ONT (125). The supplier management system (230) is configured to receive from the EMS (223) notification regarding a newly connect ONT (125).

The EMS (223) is configured to receive from the supplier management system (230) a provisioning service request (e.g. remote service request) for triggering provisioning of one or more ONTs. The EMS (223) is configured to make the provisioning based on a received provisioning service request. The provisioning service requests may include one or more provisioning parameters.

The wholesaler management system (220), the wholesaler database (221) and the EMS (223) are each part of an operator management system (224) for implementing service provisioning for ONTs (125) that are connected to the optical network (100).

In one or more embodiment, the operator management system (224) comprises means for performing one or more operations among:
- receiving from the retailer management system (210) a user service profile to be activated and a unique order reference associated with a customer order for activating the user service profile;
- generating a pre-provisioning request on the basis of the user service profile to be activated;
- sending a pre-provisioning request to the supplier management system (230);
- receiving from the supplier management system (230) a serial number of the optical network terminal (125) acquired by the supplier management system (230) and / or a pre-provisioning report for a pre-provisioning performed to the optical network terminal (125) on the basis of the pre-provisioning request;
- sending, upon connection of the optical network terminal (125) to an optical network (100), to the supplier management system (230), a notification including a serial number of the optical network terminal (125), to trigger transport layer service provisioning for the optical network terminal (125) under control of the supplier management system (230).
- receiving from the supplier management system (230) a provisioning service request configured to trigger transport layer service provisioning for the optical network terminal (125).
- implementing the transport layer service provisioning for the optical network terminal (125) on the basis of the received provisioning service request;
- sending feedback information to the supplier management system (230) upon completion of the transport layer service provisioning.
- sending the unique order reference and a pre-provisioning status to the retailer management system (210) upon receipt of the pre-provisioning report.

In one or more embodiment, the means comprises at least one processor; and at least one memory storing computer program code, wherein the at least one memory and computer program code are configured to, with the at least one processor, cause the operator management system (224) to perform one or more operations.

In one or more embodiment, the supplier management system (230) comprises means for performing one or more operations among:
- receiving a pre-provisioning request from the operator management system (224) of a network operator of an optical network (100); the pre-provisioning request may include a user service profile to be activated for the user of the optical network terminal (125);
- acquiring a serial number of the optical network terminal (125);
- performing a pre-provisioning to the optical network terminal (125); pre-provisioning may be performed on the basis of the pre-provisioning request;
- storing the acquired serial number in the preregistration database (231); the acquired serial number may be stored in association with the user service profile to be activated for the user of the optical network terminal (125);
- sending to the operator management system (224) the serial number of the optical network terminal (125) and a pre-provisioning report for the performed pre-provisioning;
- receiving, from an operator management system (224) of a network operator of the optical network (100), upon connection of the optical network terminal (125) to a optical network (100), a notification including a serial number of the optical network terminal (125);
- retrieving from the preregistration database (221) on the basis of the received serial number, the user service profile to be activated;
- triggering transport layer service provisioning for the optical network terminal (125) on the basis of the retrieved user service profile; triggering the transport layer service provisioning may include sending a provisioning service request to operator management system (224);
- sending to the operator management system (224) feedback information upon completion of the transport layer service provisioning for the optical network terminal (125).

In one or more embodiment, the means comprises at least one processor; and at least one memory storing computer program code, wherein the at least one memory and computer program code are configured to, with the at least one processor, cause the supplier management system (230) to perform one or more operations.

FIG. 2A also shows in a simplified and schematic manner the interconnection through a core network (101) between the OLT management system (180) and the POP (110) (including an OLT (111)), and the interconnection through an access network (102) between the OLT (111) and a building (including a distribution device (120), an OTP (121) and ONT (125) already described by reference to FIGS. 1A and 1B).

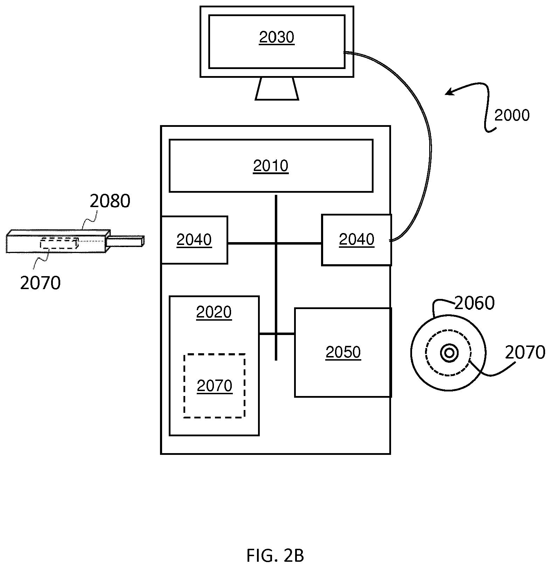

For completeness, FIG. 2B is a schematic diagram showing components of one or more of the management systems described previously: the retailer management system (210), the wholesaler management system (220) and / or EMS (223) and / or operator management system (224) and the supplier management system (230). Each of these management systems may be implemented as a processing system (2000) for performing the functions described herein for these management systems.

The processing system (2000) may be implemented as a single hardware device, for example in the form of a desktop personal computer (PC), a laptop, a personal digital assistant (PDA), a smart phone, a server, a console or may be implemented on separate interconnected hardware devices interconnected by one or more communication links, with wired and/or wireless segments. The processing system (2000) may for example be in communication with one or more cloud computing systems, one or more remote servers or devices to implement the functions described herein for the concerned processing system The processing system (2000) may also be implemented itself as a cloud computing system.

As represented schematically on Fig. 2B, the processing system (2000 may include at least one processor (2010), a memory (2020), and one or more communication interfaces (2040) (e.g. network interfaces for access to a wired / wireless network, including Ethernet interface, WIFI interface, USB interfaces etc) configured to communicate via network and / or to one or more peripheral devices (including a computer-readable storage medium 2080). The processing system 2000 may include other associated hardware such as user interfaces (2030) (e.g. keyboard, mice, display screen, etc) connected via appropriate communication interface(s) (2040) with the processor. The processing system 2000 may further include a media drive (2050) for reading a computer-readable storage medium 2060. The processor (2010) is connected to each of the other components in order to control operation thereof.

The processor (2010) may be configured to store, read, load and/or process computer program code (2070) stored in a computer-readable storage medium 2060 or 2080 and / or in the memory (2020) that, when executed by the at least one processor, causes the processing system (2000) to perform one or more steps of a method described herein for the concerned processing system (2000).

The processor (2010) may be any suitable microprocessor, microcontroller, integrated circuit, or central processing unit (CPU) including at least one hardware-based processor or processing core.

The memory (2020) may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory (2020) may be configured to store, amongst other things, an operating system of the processing system (2000) and / or one or more computer program code of one or more software applications. The RAM of the memory 2020 may be used by the processor (2010) for the temporary storage of data.

Embodiments of a computer-readable medium (2060), (2080) includes, but are not limited to, both computer storage media and communication media including any medium that facilitates transfer of a computer program from one place to another. Specifically, software instructions or computer readable program code to perform embodiments described herein may be stored, temporarily or permanently, in whole or in part, on a non-transitory computer readable medium of a local or remote storage device including one or more storage media.

As used herein, a computer storage medium (2060), (2080) may be any physical media that can be read, written or more generally accessed by a computer. Examples of computer storage media include, but are not limited to, a flash drive or other flash memory devices (e.g. memory keys, memory sticks, USB key drive), CD-ROM or other optical storage, DVD, magnetic disk storage or other magnetic storage devices, solid state memory, memory chip, RAM, ROM, EEPROM, smart cards, a relational database management system (21 1MS), a traditional database, or any other suitable medium from that can be used to carry or store program code in the form of instructions or data structures which can be read by a computer processor. Also, various forms of computer-readable medium may be used to transmit or carry instructions to a computer, including a router, gateway, server, or other transmission device, wired (coaxial cable, fiber, twisted pair, DSL cable) or wireless (infrared, radio, cellular, microwave). The instructions may include code from any computer-programming language, including, but not limited to, assembly, C, C++, Basic, SQL, MySQL, HTML, PHP, Python, Java, Javascript, etc.

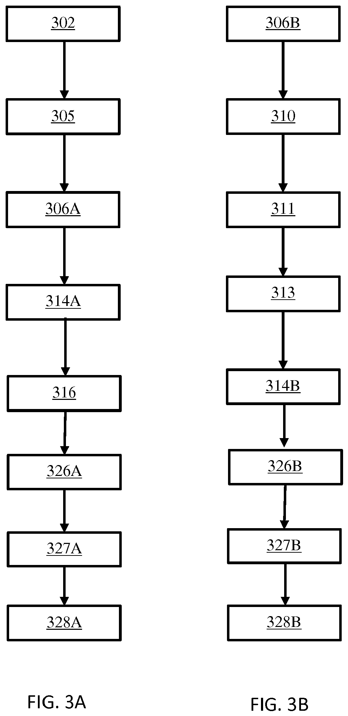

FIG. 3A shows a flowchart of a method for service provisioning to an optical network terminal (ONT) according to one or more example embodiments. Steps of the method may be implemented by a management system (224) of a network operator which may be the layer 2 service provider (wholesaler), and optionally also the layer 3 service provider (retailer). In one or more embodiments, the steps of the method are performed by an operator management system (224) of the network operator of the optical network (100) according to any embodiment described herein.

While the steps are described in a sequential manner, the man skilled in the art will appreciate that some steps may be omitted, combined, performed in different order and / or in parallel.

In step 302, a user service profile to be activated and a unique order reference associated with a customer order for activating the user service profile are received from the retailer management system (210) (or directly from the customer if the retailer and wholesaler are a same and single operator).

In step 305, a pre-provisioning request is generated on the basis of the user service profile to be activated. The pre-provisioning request may include the user service profile to be activated for a user of the optical network terminal (125). Pre-provisioning requirements and / or provisioning requirements may be derived from the user service profile.

In step 306A, the pre-provisioning request is sent to a supplier management system (230).

In step 314A, a serial number of the optical network terminal (125) acquired by the supplier management system (230) and a pre-provisioning report for a pre-provisioning performed to the optical network terminal (125) on the basis of the pre-provisioning request are received from the supplier management system (230).

In step 316, the unique order reference and a pre-provisioning status is sent to the retailer management system (210) upon receipt of the pre-provisioning report.

In step 326A, upon connection of the optical network terminal (125) to the optical network (101, 102) via an optical termination point (121), an alarms is triggered on the EMS (223), the alarm indicating that a "new" (not yet activated and provisioned) ONT (125) has been connected the optical network (100). The EMS (223) is configured to send to the supplier management system (230) of the ONT supplier a notification for triggering service provisioning to the ONT (125) under control of the ONT supplier. The notification includes the serial number of the concerned optical network terminal (125)

In step 327A, the service provisioning to the ONT (125) is implemented under control of the ONT supplier, e.g. under control of the supplier management system (230), on the basis of the records stored in the preregistration database (231). The EMS (223) of the operator management system (224) receives from the supplier management system (230) a provisioning service request to trigger service provisioning for the concerned optical network terminal (125). The provisioning service request may include one or more parameters for service provisioning: port(s) and / or slot(s) on the OLT, maximum data rate, addressing parameters to be used for the layer 3 services to be provided, etc. The EMS (223) performs service provisioning for the concerned ONT (125) on the basis of the provisioning service request.

In step 328A, an activation feedback is sent to the supplier management system (230) upon completion of the service provisioning.

FIG. 3B shows a flowchart of a method for service pre-provisioning to an optical network terminal (ONT) according to one or more example embodiments. Steps of the method may be implemented by a supplier management system (230) of an ONT supplier.

While the steps are described in a sequential manner, the man skilled in the art will appreciate that some steps may be omitted, combined, performed in different order and / or in parallel.

In step 306B, a pre-provisioning request is received from an operator management system (224) of a network operator of an optical network (100) for an optical network terminal (125). The pre-provisioning request may include a user service profile to be activated for a user of the optical network terminal (125). Pre-provisioning requirements and / or provisioning requirements may be derived from the user service profile.

In step 310, a serial number of the optical network terminal (125) is acquired.

In step 311, a pre-provisioning to the optical network terminal (125) is performed on the basis of the pre-provisioning request.

In step 313, a pre-provisioning report is generated. The acquired serial number is stored in a preregistration database (231) of the ONT supplier in association with the user service profile to be activated for the user of the optical network terminal (125) and / or the pre-provisioning report.

In step 314B, the serial number of the optical network terminal (125) and a pre-provisioning report for the performed pre-provisioning is sent to the operator management system (230).

In step 326B, upon connection of an ONT (125) to the optical network (100), the supplier management system (230) of the ONT supplier receives a notification from the EMS (223) of the operator management system (220) of the network operator of the optical network (100). The notification includes the serial number of the concerned optical network terminal (125). The user service profile recorded in association with a serial number matching with a serial number received is retrieved from the preregistration database (231).

In step 327B, the service provisioning to the ONT (125) is implemented under control of the ONT supplier, e.g. under control of the supplier management system (230). The supplier management system (230) sends a provisioning service request to the EMS (223) to trigger service provisioning for the concerned optical network terminal (125). The provisioning service request may be generated on the basis of the retrieved user service profile. The provisioning service request may for example include one or more parameters for service provisioning: port(s) and / or slot(s) on the OLT, maximum data rate, addressing parameters to be used for the layer 3 services to be provided, etc.

In step 328B, upon activation of the ONT and completion of the service provisioning, an activation feedback is received by the supplier management system (230) of the ONT supplier from the EMS (223).

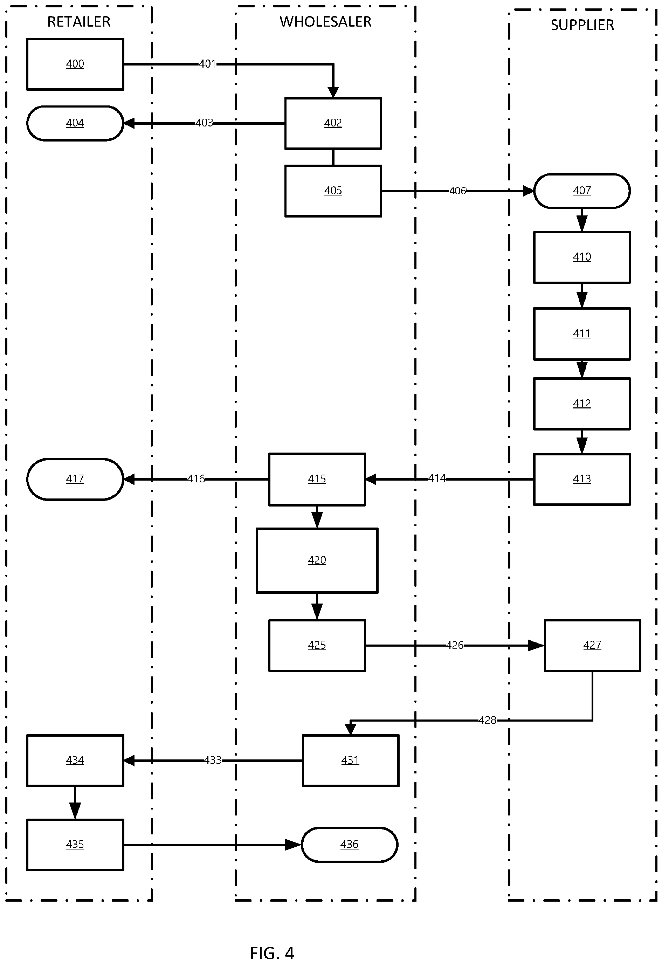

FIG. 4 shows another flowchart of a method for service provisioning to an optical network terminal, ONT, (125) according to one or more example embodiments.

In this example, a retailer (e.g. layer 3 service provider), a wholesaler (e.g. optical network operator and layer 2 service provider) and supplier (e.g. ONT supplier) collaborate to activate for a customer (e.g. end user) a connection to an optical network (ON) and one or more services. In this example the retailer, a wholesaler and ONT supplier are described as being separate actors. However the same process could be used when the retailer and wholesaler are a same and single company (i.e. the operator of an optical network) that relies on the pre-provisioning service of an ONT supplier. Similarly, a single company may acts as retailer (layer 3 service provider) and wholesaler (layer 2 service provider) and ONT supplier by using the same processing flow.

While the steps are described in a sequential manner, the man skilled in the art will appreciate that some steps may be omitted, combined, performed in different order and / or in parallel.

In step 400, a customer order is received by a retailer from a customer for activating a connection to an optical network and for services (e.g. layer 3 and above). The customer order is recorded in the retailer database (211): an order data set is recorded that includes information for the connection and / or the services to be activated. The order data set may include: a retailer order reference, an offer code identify a business offer (e.g. monthly cost, available services, etc) selected by the customer, a user service profile to be activated, shipping information (e.g. name and address of the customer), a flag for indicating whether an optical connector has already been installed in the customer's home. The order data set also includes a unique order reference allocated to the customer order. In one or more embodiments, the unique order reference is to be shared with the wholesaler and supplier. This unique order reference is used to be able to track the processing of the customer order through the complete workflow implemented in collaboration between the retailer, wholesaler and supplier. The order data set is stored in the retailer database (211) in association with the unique order reference.

In step 401, an activation request for activation of the new connection is sent from the retailer management system (210) to the wholesaler management system 220. A pre-integrated interface (including e.g. software interface, or application program interface, API) may be used. The activation request may include the unique order reference, the user service profile to be activated and the shipping information.

In step 402, upon receipt of the activation request, an acknowledgment may be sent from the wholesaler management system (220) to the retailer management system (210).

In step 403, the retailer management system (210) registers the date of receipt of the acknowledgement and a status information for the provisioning process is stored in the retailer database (211) in association with the unique order reference. The status information may for example indicate that the wholesaler has received the activation request.

In step 404, the processing of the customer order by the retailer ends.

In step 405, a pre-provisioning request is generated by the wholesaler management system (220). The pre-provisioning request may include the unique order reference. The pre-provisioning request may include the user service profile to be activated and the shipping information. The user service profile includes pre-provisioning requirements.

In step 406, the pre-provisioning request is sent from the wholesaler management system (220) to the supplier management system (230) with the unique order reference.

In step 407, the pre-provisioning is started by the supplier. The pre-provisioning phase may include steps 407-417.

In step 410, an ONT is picked from the stocks in a warehouse of the supplier. The serial number is acquired by the supplier management system (230). The serial number may be printed as an alphanumeric string on a sticker on the packaging of the ONT. The serial number may also be encoded within a QR code or a barcode, which is printed on this sticker in association with the alphanumeric string. The acquisition may be performed manually, that is by a user that enters the alphanumeric string in the supplier management system (230). The acquisition may be performed by an electronic reader configured to read a QR code or a barcode and acquired electronically by the supplier management system via a dedicated communication link (e.g. wireless link).

In step 411, the ONT supplier performs a pre-provisioning of the ONT to be activated. The pre-provisioning includes for example a configuration of the ONT in dependence upon the user service profile to be activated and / or the connection port to which the ONT will be connected. For example, the ONT is flanged (e.g. by logical configuration) to provide at most a predefined maximum data rate (e.g. corresponding to the user service profile to be activated. One or more configuration parameters (e.g. the maximum data rate) are recorded in the pre-provisioning database (231) together with the acquired serial number and shipping information. This step is only a pre-provisioning step insofar the complete configuration will only be performed when the ONT will be connected at the customer's home via an optical connector to the optical network ON.

In step 412, the ONT is shipped to the customer by the supplier on the basis of the shipping information.

In step 413, a first pre-provisioning report is generated by the supplier management system (230) and stored in the pre-provisioning database (231) together with the acquired serial number. The first pre-provisioning report may include the unique order reference, a supplier order reference allocated to the ONT, one or more configuration parameters and the serial number.

In step 414, the first pre-provisioning report is sent to the wholesaler management system (220) by the supplier management system 230 with the unique order reference. The first pre-provisioning report is received by the wholesaler management system (220). The acquired serial number of the ONT is stored in the wholesaler database (221) in association with the unique order reference, the supplier order reference allocated to the ONT and / or the first pre-provisioning report.

In step 415, a second pre-provisioning report for the retailer is generated by the wholesaler management system 230. The second pre-provisioning report may or not be identical to the first pre-provisioning report received from the supplier. The second pre-provisioning report may include the unique order reference, a shipping status and / or a pre-provisioning status to confirm that the pre-provisioning has been performed and the ONT been sent to the customer. The second pre-provisioning report is stored in the wholesaler database (221) in association with the unique order reference.

In step 416, the second pre-provisioning report is sent by the wholesaler management system (220) to the retailer management system (210) with the unique order reference.

In step 417, the second pre-provisioning report is stored in the retailer database (211) in association with the unique order reference and the corresponding status information for the provisioning process is updated to indicate that pre-provisioning has been performed.

In step 420, the provisioning phase is started. It is assumed that the ONT has now been received by the customer after shipping by the retailer and that the optical connector is already installed in the customer's home.

In step 425, a user (e.g. the customer) connects the ONT to the OTP (Optical Termination Point) installed in the user's home. The ONT is connected to the OTP by means of a piece of fiber cable included in the shipment. The ONT may be connected easily by any customer without the need of the presence of a technician.

In step 426, upon connection of the ONT in step 425, the ONT serial number is automatically transmitted by a message sent through the optical network (100) to an optical receiver in the OLT. The message including the serial number may be decoded by the ONT management system (180). An alarm is triggered on the EMS (223) upon detection that a "new" (i.e. not yet activated) ONT has been connected.

In step 427, the supplier management system (230) receives from the EMS (223) a notification including the serial number of the ONT (125) for which an alarm has been triggered. The supplier management system (230) searches in the pre-registration database (231) a record associated with the serial number received in step 426. The supplier management system (230) retrieves from the pre-registration database (231) the user service profile recorded in association with the serial number acquired in step 410 that matches the ONT serial number received in step 426. A provisioning service request based on the user service profile to be activated is generated. The provisioning service request is sent to the EMS (223) for service provisioning and activation of the concerned ONT (125). Service provisioning (layer 2 service provision) is thus performed under control of the supplier management system (230) by the EMS (223).

In step 428, once the EMS (223) has successfully completed the layer 2 (transport layer) service provision and activation, feedback information regarding the activation of the ONT is generated. The feedback information may for example include configuration information of the activated ONT: assigned physical port(s) and / or slot(s) on the OLT optically connected with the ONT, the location of the ONT, optical measurements and / or any logical configuration information (e.g. predefined maximum data rate).

In step 431, a provisioning report is generated by the wholesaler management system 220. The provisioning report may include part or all of feedback information generated in step 428. The provisioning report is a report for the layer 2 (transport layer) provisioning only, since the provisioning is performed at this stage only for the layer 2 (transport layer) and not for the upper layers.

In step 433, the provisioning report is sent by the wholesaler management system 220 to the retailer management system (210) with the unique order reference.

In step 434, upon receipt of the provisioning report and the unique order reference, the retailer start provisioning the layer 3 (and above) services requested by the customer identified on the basis of the unique order reference and customer order stored in association with the unique order reference. Connection between the ONT and a retailer network for providing the request layer 3 (and above) services is established in a conventional manner.

In step 435, the provisioning is completed on all layers and a commissioning report may be generated based on the activation date at which provisioning has been completed on all layers.

In step 436, provisioning process ends.

Several example embodiments have been described by reference to the figures. In the example embodiments, there is no need of existing internet connection at user's home for sending the ONT serial number. Though mobile network provides universal coverage and smart phones are almost a household commonality, there still could be situations that there is no internet connection is available when the ONT needs to be installed.

Further the issue of failing to properly scan the bar code or QR code of ONT and / or of a wrong data entry is avoided as the burden is transferred from the customer to the supplier. No technician need to be present if the optical connector is already installed in the user's home.

In addition, there is no need for the operator (either retailer or wholesaler depending on their responsibility demarcation) to maintain an ONT warehouse and the delivery/shipment of the ONT to the customer. They may both rely on a supplier and interact with this supplier in a seamless way from the customer point of view.

Maintaining a stock level just right for the market dynamics may also be difficult and involves a whole supply chain organization to make it happen. It is easier for the supplier to achieve such a goal for a plurality of retailers as the supplier already has all existing storage facilities while the retailer may not have such facilities and / or the resources (including an appropriate management system) for managing stocks, pre-provisioning and shipping to customer. Thus the supply chain of the supplier is integrated in a seamless way in the service provisioning workflow.

Finally, in the described workflow, as the pre-registration of the serial number in the wholesaler is performed before shipping of the ONT, one can guaranty that at the moment the ONT is connected, the layer 2 (transport layer) provisioning may be performed immediately without waiting the serial number. This avoid useless connection of the ONT and all situation in which no provisioning may be implemented since the wholesaler does not know which user service profile has to be activated for a received serial number.

It will be appreciated that one or more functions depicted and described herein may be implemented in software (e.g., via implementation of software on one or more processors, for executing on a general purpose computer (e.g., via execution by one or more processors) so as to implement a special purpose computer, or the like) and/or may be implemented in hardware (e.g., using a general purpose computer, one or more application specific integrated circuits (ASIC), and/or any other hardware equivalents).

A further embodiment is a computer program product comprising a computer readable storage medium having computer readable program code embodied therein, the computer readable program code being configured to implement one of the above methods when being loaded on a computer, a processor, or a programmable hardware component. In some embodiments, the computer readable storage medium is non-transitory.

Further one or more steps of methods described therein may be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims.

## Claims

1. A supplier management system (230) of a supplier of an optical network terminal (125), the supplier management system (230) comprising means for performing a method comprising:
acquiring (310; 410) a serial number of the optical network terminal (125);
performing (311; 411) a pre-provisioning to the optical network terminal (125);
storing (311; 411) the acquired serial number in a preregistration database (231) in association with a user service profile to be activated for the user of the optical network terminal (125);
receiving (326B; 426), from an operator management system (224) of a network operator of the optical network (100), upon connection of the optical network terminal (125) to an optical network (100), a notification including a serial number of the optical network terminal (125);
retrieving (327B; 427) from the preregistration database (221) on the basis of the received serial number, the user service profile to be activated;
triggering (327B; 427) transport layer service provisioning for the optical network terminal (125) on the basis of the retrieved user service profile.

2. A supplier management system (230) according to claim 1, wherein triggering (327; 427) transport layer service provisioning includes sending a provisioning service request to operator management system (224).

3. A supplier management system (230) according to claim 1 or 2, wherein the method further comprises:
receiving (306B; 406) a pre-provisioning request from the operator management system (224), the pre-provisioning request including the user service profile to be activated;
sending (314B; 414) to the operator management system (224) the serial number of the optical network terminal (125) and a pre-provisioning report for the performed pre-provisioning.

4. A supplier management system (230) according to any of claim 1 to 3, wherein the means are further configured to perform:
sending (328B, 428) to the operator management system (224) feedback information upon completion of the transport layer service provisioning for the optical network terminal (125).

5. The supplier management system (230) according to any of claims 1 to 4, wherein the means comprises:
at least one processor; and
at least one memory storing computer program code, wherein the at least one memory and computer program code are configured to, with the at least one processor, cause the supplier management system to perform the steps of the method.

6. An operator management system (224) for transport layer service provisioning to an optical network terminal (125), the operator management system (224) comprising means for performing a method comprising:
sending (306A; 406) a pre-provisioning request to a supplier management system (230), wherein the pre-provisioning request is generated on the basis of a user service profile to be activated;
receiving (314A; 414) from the supplier management system (230) a serial number of the optical network terminal (125) acquired by the supplier management system (230) and a pre-provisioning report for a pre-provisioning performed (315; 415) to the optical network terminal (125) on the basis of the pre-provisioning request;
sending (326A, 426), upon connection of the optical network terminal (125) to an optical network (100), to the supplier management system (230), a notification including a serial number of the optical network terminal (125), to trigger (327; 427) transport layer service provisioning for the optical network terminal (125) under control of the supplier management system (230);
receiving (327A; 427), from the supplier management system (230), a provisioning service request that triggers transport layer service provisioning for the optical network terminal (125).

7. The operator management system (224) according to claim 6, wherein the method further comprises:
receiving (302; 402) from a retailer management system (210) the user service profile to be activated and a unique order reference associated with a customer order for activating the user service profile;
generating (305; 405) the pre-provisioning request on the basis of the user service profile to be activated;
sending (316; 416) the unique order reference and a pre-provisioning status to the retailer management system (210) upon receipt of the pre-provisioning report.

8. The operator management system according to any of claims 6 to 7, wherein the means comprises:
at least one processor; and
at least one memory storing computer program code, wherein the at least one memory and computer program code are configured to, with the at least one processor, cause the operator management system to perform the steps of the method.

9. A management system transport layer service provisioning comprising an operator management system (224) according to any of claims 6 to 8 and a supplier management system (230) according to any of claims 1 to 5.

10. A method for transport layer service provisioning to an optical network terminal (125), the method comprising:
acquiring (310; 410) a serial number of the optical network terminal (125);
performing (311; 411) a pre-provisioning to the optical network terminal (125);
storing (311; 411) the acquired serial number in a preregistration database (231) in association with a user service profile to be activated for the user of the optical network terminal (125);
receiving (326B; 426), from an operator management system (224) of a network operator of the optical network (100), upon connection of the optical network terminal (125) to a optical network (100), a notification including a serial number of the optical network terminal (125);
retrieving (327B; 427) from the preregistration database (221) on the basis of the received serial number, the user service profile to be activated;
triggering (327B; 427) transport layer service provisioning for the optical network terminal (125) on the basis of the retrieved user service profile.

11. A method for transport layer service provisioning to an optical network terminal (125), the method comprising:
sending (306A; 406) a pre-provisioning request to a supplier management system (230);
receiving (314A; 414) from the supplier management system (230) a serial number of the optical network terminal (125) acquired by the supplier management system (230) and a pre-provisioning report for a pre-provisioning performed (315; 415) to the optical network terminal (125) on the basis of the pre-provisioning request;
sending (326A, 426), upon connection of the optical network terminal (125) to an optical network (100), to the supplier management system (230), a notification including a serial number of the optical network terminal (125), to trigger (327; 427) transport layer service provisioning for the optical network terminal (125) under control of the supplier management system (230);
receiving (327A; 427), from the supplier management system (230), a provisioning service request that triggers transport layer service provisioning for the optical network terminal (125).

12. A method according to claim 11, wherein the method further comprises:
receiving (302; 402) from a retailer management system (210) the user service profile to be activated and a unique order reference associated with a customer order for activating the user service profile;
generating (305; 405) the pre-provisioning request on the basis of the user service profile to be activated.
sending (316; 416) the unique order reference and a pre-provisioning status to the retailer management system (210) upon receipt of the pre-provisioning report.

13. Computer program code comprising instructions which, when executed by at least one processor, cause the performance of the steps of a method according to claim 10 or any of claims 11 to 12.

14. A computer readable storage medium storing computer program code according to claim 13.

15. Data carrier signal carrying a computer program code according to claim 13.

## Patentansprüche

1. Lieferantenverwaltungssystem (230) eines Lieferanten eines optischen Netzwerkendgeräts (125), wobei das Lieferantenverwaltungssystem (230) Mittel zum Durchführen eines Verfahrens umfasst, das Folgendes umfasst:
Erfassen (310; 410) einer Seriennummer des optischen Netzwerkendgeräts (125);
Durchführen (311; 411) einer Vorabbereitstellung für das optische Netzwerkendgerät (125);
Speichern (311; 411) der erfassten Seriennummer in einer Vorregistrierungsdatenbank (231) in Verbindung mit einem Benutzerdienstprofil, das für den Benutzer des optischen Netzwerkendgeräts (125) zu aktivieren ist;
Empfangen (326B; 426) einer Benachrichtigung, die eine Seriennummer des optischen Netzwerkendgeräts (125) beinhaltet, von einem Betreiberverwaltungssystem (224) eines Netzwerkbetreibers des optischen Netzwerks (100) nach Verbindung des optischen Netzwerkendgeräts (125) mit einem optischen Netzwerk (100);
Abrufen (327B; 427) des zu aktivierenden Benutzerdienstprofils aus der Vorregistrierungsdatenbank (221) auf Basis der empfangenen Seriennummer;
Auslösen (327B; 427) einer Transportschichtdienstbereitstellung für das optische Netzwerkendgerät (125) auf Basis des abgerufenen Benutzerdienstprofils.

2. Lieferantenverwaltungssystem (230) nach Anspruch 1, wobei das Auslösen (327; 427) einer Transportschichtdienstbereitstellung das Senden einer Bereitstellungsdienstanforderung an das Betreiberverwaltungssystem (224) beinhaltet.

3. Lieferantenverwaltungssystem (230) nach Anspruch 1 oder 2, wobei das Verfahren ferner Folgendes umfasst:
Empfangen (306B; 406) einer Vorabbereitstellungsanforderung vom Betreiberverwaltungssystem (224), wobei die Vorabbereitstellungsanforderung das zu aktivierende Benutzerdienstprofil beinhaltet;
Senden (314B; 414) der Seriennummer des optischen Netzwerkendgeräts (125) und eines Vorabbereitstellungsberichts für die durchgeführte Vorabbereitstellung an das Betreiberverwaltungssystem (224).

4. Lieferantenverwaltungssystem (230) nach einem der Ansprüche 1 bis 3, wobei die Mittel ferner dazu ausgelegt sind, Folgendes durchzuführen:
Senden (328B; 428) von Rückmeldungsinformationen nach Abschluss der Transportschichtdienstbereitstellung für das optische Netzwerkendgerät (125) an das Betreiberverwaltungssystem (224).

5. Lieferantenverwaltungssystem (230) nach einem der Ansprüche 1 bis 4, wobei die Mittel Folgendes umfassen:
mindestens einen Prozessor; und
mindestens einen Speicher, in dem Computerprogrammcode gespeichert ist, wobei der mindestens eine Speicher und der Computerprogrammcode dazu ausgelegt sind, mit dem mindestens einen Prozessor zu bewirken, dass das Lieferantenverwaltungssystem die Schritte des Verfahrens durchführt.

6. Betreiberverwaltungssystem (224) für eine Transportschichtdienstbereitstellung für ein optisches Netzwerkendgerät (125), wobei das Betreiberverwaltungssystem (224) Mittel zum Durchführen eines Verfahrens umfasst, das Folgendes umfasst:
Senden (306A; 406) einer Vorabbereitstellungsanforderung an ein Lieferantenverwaltungssystem (230), wobei die Vorabbereitstellungsanforderung auf Basis eines zu aktivierenden Benutzerdienstprofils erzeugt wird;
Empfangen (314A; 414) einer Seriennummer des optischen Netzwerkendgeräts (125), die vom Lieferantenverwaltungssystem (230) erfasst wird, und eines Vorabbereitstellungsberichts für eine Vorabbereitstellung, die für das optische Netzwerkendgerät (125) auf Basis der Vorabbereitstellungsanforderung durchgeführt (315; 415) wird, vom Lieferantenverwaltungssystem (230) ;
Senden (326A; 426) einer Benachrichtigung, die eine Seriennummer des optischen Netzwerkendgeräts (125) beinhaltet, nach Verbindung des optischen Netzwerkendgeräts (125) mit einem optischen Netzwerk (100) an das Lieferantenverwaltungssystem (230), um eine Transportschichtdienstbereitstellung für das optische Netzwerkendgerät (125) unter Steuerung des Lieferantenverwaltungssystems (230) auszulösen (327; 427);
Empfangen (327A; 427) einer Bereitstellungsdienstanforderung, die eine Transportschichtdienstbereitstellung für das optische Netzwerkendgerät (125) auslöst, vom Lieferantenverwaltungssystem (230).

7. Betreiberverwaltungssystem (224) nach Anspruch 6, wobei das Verfahren ferner Folgendes umfasst:
Empfangen (302; 402) des zu aktivierenden Benutzerdienstprofils und einer eindeutigen Auftragsreferenz, die mit einem Kundenauftrag verknüpft ist, zum Aktivieren des Benutzerdienstprofils von einem Einzelhändlerverwaltungssystem (210) ;
Erzeugen (305; 405) der Vorabbereitstellungsanforderung auf Basis des zu aktivierenden Benutzerdienstprofils;
Senden (316; 416) der eindeutigen Auftragsreferenz und eines Vorabbereitstellungsstatus nach Empfang des Vorabbereitstellungsberichts an das Einzelhändlerverwaltungssystem (210).

8. Betreiberverwaltungssystem nach einem der Ansprüche 6 bis 7, wobei die Mittel Folgendes umfassen:
mindestens einen Prozessor; und
mindestens einen Speicher, in dem Computerprogrammcode gespeichert ist, wobei der mindestens eine Speicher und der Computerprogrammcode dazu ausgelegt sind, mit dem mindestens einen Prozessor zu bewirken, dass das Betreiberverwaltungssystem die Schritte des Verfahrens durchführt.

9. Verwaltungssystemtransportschichtdienstbereitstellung, die ein Betreiberverwaltungssystem (224) nach einem der Ansprüche 6 bis 8 und ein Lieferantenverwaltungssystem (230) nach einem der Ansprüche 1 bis 5 umfasst.

10. Verfahren für eine Transportschichtdienstbereitstellung für ein optisches Netzwerkendgerät (125), wobei das Verfahren Folgendes umfasst:
Erfassen (310; 410) einer Seriennummer des optischen Netzwerkendgeräts (125);
Durchführen (311; 411) einer Vorabbereitstellung für das optische Netzwerkendgerät (125);
Speichern (311; 411) der erfassten Seriennummer in einer Vorregistrierungsdatenbank (231) in Verbindung mit einem Benutzerdienstprofil, das für den Benutzer des optischen Netzwerkendgeräts (125) zu aktivieren ist;
Empfangen (326B; 426) einer Benachrichtigung, die eine Seriennummer des optischen Netzwerkendgeräts (125) beinhaltet, von einem Betreiberverwaltungssystem (224) eines Netzwerkbetreibers des optischen Netzwerks (100) nach Verbindung des optischen Netzwerkendgeräts (125) mit einem optischen Netzwerk (100);
Abrufen (327B; 427) des zu aktivierenden Benutzerdienstprofils aus der Vorregistrierungsdatenbank (221) auf Basis der empfangenen Seriennummer;
Auslösen (327B; 427) einer Transportschichtdienstbereitstellung für das optische Netzwerkendgerät (125) auf Basis des abgerufenen Benutzerdienstprofils.

11. Verfahren für eine Transportschichtdienstbereitstellung für ein optisches Netzwerkendgerät (125), wobei das Verfahren Folgendes umfasst:
Senden (306A; 406) einer Vorabbereitstellungsanforderung an ein Lieferantenverwaltungssystem (230);
Empfangen (314A; 414) einer Seriennummer des optischen Netzwerkendgeräts (125), die vom Lieferantenverwaltungssystem (230) erfasst wird, und eines Vorabbereitstellungsberichts für eine Vorabbereitstellung, die für das optische Netzwerkendgerät (125) auf Basis der Vorabbereitstellungsanforderung durchgeführt (315; 415) wird, vom Lieferantenverwaltungssystem (230) ;
Senden (326A; 426) einer Benachrichtigung, die eine Seriennummer des optischen Netzwerkendgeräts (125) beinhaltet, nach Verbindung des optischen Netzwerkendgeräts (125) mit einem optischen Netzwerk (100) an das Lieferantenverwaltungssystem (230), um eine Transportschichtdienstbereitstellung für das optische Netzwerkendgerät (125) unter Steuerung des Lieferantenverwaltungssystems (230) auszulösen (327; 427);
Empfangen (327A; 427) einer Bereitstellungsdienstanforderung, die eine Transportschichtdienstbereitstellung für das optische Netzwerkendgerät (125) auslöst, vom Lieferantenverwaltungssystem (230).

12. Verfahren nach Anspruch 11, wobei das Verfahren ferner Folgendes umfasst:
Empfangen (302; 402) des zu aktivierenden Benutzerdienstprofils und einer eindeutigen Auftragsreferenz, die mit einem Kundenauftrag verknüpft ist, zum Aktivieren des Benutzerdienstprofils von einem Einzelhändlerverwaltungssystem (210) ;
Erzeugen (305; 405) der Vorabbereitstellungsanforderung auf Basis des zu aktivierenden Benutzerdienstprofils.
Senden (316; 416) der eindeutigen Auftragsreferenz und eines Vorabbereitstellungsstatus nach Empfang des Vorabbereitstellungsberichts an das Einzelhändlerverwaltungssystem (210).

13. Computerprogrammcode, der Anweisungen umfasst, die, wenn sie von mindestens einem Prozessor ausgeführt werden, die Durchführung der Schritte eines Verfahrens nach Anspruch 10 oder einem der Ansprüche 11 bis 12 bewirken.

14. Computerlesbares Speichermedium, auf dem Computerprogrammcode nach Anspruch 13 gespeichert ist.

15. Datenträgersignal, auf dem sich ein Computerprogrammcode nach Anspruch 13 befindet.

## Revendications

1. Système de gestion de fournisseur (230) d'un fournisseur d'un terminal de réseau optique (125), le système de gestion de fournisseur (230) comprenant des moyens pour réaliser un procédé comprenant :
l'acquisition (310 ; 410) d'un numéro de série du terminal de réseau optique (125) ;
la réalisation (311 ; 411) d'un pré-approvisionnement du terminal de réseau optique (125) ;
le stockage (311 ; 411) du numéro de série acquis dans une base de données de pré-enregistrement (231) en association avec un profil de service utilisateur à activer pour l'utilisateur du terminal de réseau optique (125) ;
la réception (326B ; 426), en provenance d'un système de gestion d'opérateur (224), d'un opérateur de réseau du réseau optique (100), lors de la connexion du terminal de réseau optique (125) à un réseau optique (100), une notification comportant un numéro de série du terminal de réseau optique (125) ;
la récupération (327B ; 427) du profil de service utilisateur à activer à partir de la base de données de pré-enregistrement (221), sur la base du numéro de série reçu ;
le déclenchement (327B ; 427) d'un approvisionnement de services de couche transport pour le terminal de réseau optique (125) sur la base du profil de service utilisateur récupéré.

2. Système de gestion de fournisseur (230) selon la revendication 1, dans lequel le déclenchement (327 ; 427) de l'approvisionnement de services de couche transport comporte l'envoi d'une demande de service d'approvisionnement au système de gestion d'opérateur (224).

3. Système de gestion de fournisseur (230) selon la revendication 1 ou 2, dans lequel le procédé comprend en outre :
la réception (306B ; 406) d'une demande de pré-approvisionnement en provenance du système de gestion d'opérateur (224), la demande de pré-approvisionnement comportant le profil de service utilisateur à activer ;
l'envoi (314B ; 414) du numéro de série du terminal de réseau optique (125) et d'un rapport de pré-approvisionnement au système de gestion d'opérateur (224) pour le pré-approvisionnement réalisé.

4. Système de gestion de fournisseur (230) selon l'une quelconque des revendications 1 à 3, dans lequel les moyens sont en outre configurés pour réaliser :
l'envoi (328B, 428) d'informations de rétroaction au système de gestion d'opérateur (224) à l'achèvement de l'approvisionnement de services de couche transport pour le terminal de réseau optique (125).

5. Système de gestion de fournisseur (230) selon l'une quelconque des revendications 1 à 4, dans lequel les moyens comprennent :
au moins un processeur ; et
au moins une mémoire stockant un code de programme informatique, dans lequel l'au moins une mémoire et le code de programme informatique sont configurés pour, avec l'au moins un processeur, amener le système de gestion de fournisseur à réaliser les étapes du procédé.

6. Système de gestion d'opérateur (224) pour l'approvisionnement de services de couche transport à un terminal de réseau optique (125), le système de gestion d'opérateur (224) comprenant des moyens pour réaliser un procédé comprenant :
l'envoi (306A ; 406) d'une demande de pré-approvisionnement à un système de gestion de fournisseur (230), dans lequel la demande de pré-approvisionnement est générée sur la base d'un profil de service utilisateur à activer ;
la réception (314A ; 414), en provenance du système de gestion de fournisseur (230), d'un numéro de série du terminal de réseau optique (125) acquis par le système de gestion de fournisseur (230) et d'un rapport de pré-approvisionnement pour un pré-approvisionnement réalisé (315 ; 415) sur le terminal de réseau optique (125) sur la base de la demande de pré-approvisionnement ;
l'envoi (326A, 426) au système de gestion de fournisseur (230), lors de la connexion du terminal de réseau optique (125) à un réseau optique (100), d'une notification comportant un numéro de série du terminal de réseau optique (125), pour déclencher (327 ; 427) l'approvisionnement de services de couche transport pour le terminal de réseau optique (125) sous le contrôle du système de gestion de fournisseur (230) ;
la réception (327A ; 427), en provenance du système de gestion de fournisseur (230), d'une demande de service d'approvisionnement qui déclenche l'approvisionnement de services de couche transport pour le terminal de réseau optique (125).

7. Système de gestion d'opérateur (224) selon la revendication 6, dans lequel le procédé comprend en outre :
la réception (302 ; 402), en provenance d'un système de gestion de détaillant (210), du profil de service utilisateur à activer et d'une référence de commande unique associée à une commande de client pour activer le profil de service utilisateur ;
la génération (305 ; 405) de la demande de pré-approvisionnement sur la base du profil de service utilisateur à activer ;
l'envoi (316 ; 416) de la référence de commande unique et d'un statut de pré-approvisionnement au système de gestion de détaillant (210) à la réception du rapport de pré-approvisionnement.

8. Système de gestion d'opérateur selon l'une des revendications 6 et 7, dans lequel les moyens comprennent :
au moins un processeur ; et
au moins une mémoire stockant un code de programme informatique, dans lequel l'au moins une mémoire et le code de programme informatique sont configurés pour, avec l'au moins un processeur, amener le système de gestion d'opérateur à réaliser les étapes du procédé.

9. Approvisionnement de services de couche transport de système de gestion comprenant un système de gestion d'opérateur (224) selon l'une quelconque des revendications 6 à 8 et un système de gestion de fournisseur (230) selon l'une quelconque des revendications 1 à 5.

10. Procédé d'approvisionnement de services de couche transport vers un terminal de réseau optique (125), le procédé comprenant :
l'acquisition (310 ; 410) d'un numéro de série du terminal de réseau optique (125) ;
la réalisation (311 ; 411) d'un pré-approvisionnement du terminal de réseau optique (125) ;
le stockage (311 ; 411) du numéro de série acquis dans une base de données de pré-enregistrement (231) en association avec un profil de service utilisateur à activer pour l'utilisateur du terminal de réseau optique (125) ;
la réception (326B ; 426), en provenance d'un système de gestion d'opérateur (224), d'un opérateur de réseau du réseau optique (100), lors de la connexion du terminal de réseau optique (125) à un réseau optique (100), une notification comportant un numéro de série du terminal de réseau optique (125) ;
la récupération (327B ; 427) du profil de service utilisateur à activer à partir de la base de données de pré-enregistrement (221), sur la base du numéro de série reçu ;
le déclenchement (327B ; 427) de l'approvisionnement de services de couche transport pour le terminal de réseau optique (125) sur la base du profil de service utilisateur récupéré.

11. Procédé d'approvisionnement de services de couche transport vers un terminal de réseau optique (125), le procédé comprenant :
l'envoi (306A ; 406) d'une demande de pré-approvisionnement à un système de gestion de fournisseur (230) ;
la réception (314A ; 414), à partir du système de gestion de fournisseur (230), d'un numéro de série du terminal de réseau optique (125) acquis par le système de gestion de fournisseur (230) et d'un rapport de pré-approvisionnement pour un pré-approvisionnement réalisé (315 ; 415) sur le terminal de réseau optique (125) sur la base de la demande de pré-approvisionnement ;
l'envoi (326A, 426) au système de gestion de fournisseur (230), lors de la connexion du terminal de réseau optique (125) à un réseau optique (100), d'une notification comportant un numéro de série du terminal de réseau optique (125), pour déclencher (327 ; 427) l'approvisionnement de services de couche transport pour le terminal de réseau optique (125) sous le contrôle du système de gestion de fournisseur (230) ;
la réception (327A ; 427), en provenance du système de gestion de fournisseur (230), d'une demande de service d'approvisionnement qui déclenche l'approvisionnement de services de couche transport pour le terminal de réseau optique (125).

12. Procédé selon la revendication 11, dans lequel le procédé comprend en outre :
la réception (302 ; 402) en provenance d'un système de gestion de détaillant (210), du profil de service utilisateur à activer et d'une référence de commande unique associée à une commande de client pour activer le profil de service utilisateur ;
la génération (305 ; 405) de la demande de pré-approvisionnement sur la base du profil de service utilisateur à activer,
l'envoi (316 ; 416) de la référence de commande unique et d'un statut de pré-approvisionnement au système de gestion de détaillant (210) à la réception du rapport de pré-approvisionnement.

13. Code de programme informatique comprenant des instructions qui, lorsqu'elles sont exécutées par au moins un processeur, provoquent la réalisation des étapes d'un procédé selon la revendication 10 ou l'une des revendications 11 et 12.

14. Support de stockage lisible par ordinateur stockant un code de programme informatique selon la revendication 13.

15. Signal porteur de données portant un code de programme informatique selon la revendication 13.
